# EUROPÄISCHE PATENTSCHRIFT

(11) **EP 1 760 910 B1**
(45) Veröffentlichungstag und Bekanntmachung des Hinweises auf die Patenterteilung: **19.03.2008**
(21) Anmeldenummer: 05018931.5
(22) Anmeldetag: 31.08.2005
(51) Int. Cl.: H04B 10/00, G02B 6/42

(54) **Optisches Bussystem**
Optical bus system
Système de bus optique

(43) Veröffentlichungstag der Anmeldung: 07.03.2007
(73) Patentinhaber: Micronas Holding GmbH, 79108 Freiburg (DE)
(72) Erfinder: Sieben, Ulrich, Dr. rer.nat., 79279 Vörstetten (DE); Klapproth, Holger, Dr., 79108 Freiburg (DE)
(74) Vertreter: Huwer, Andreas

(56) Entgegenhaltungen:
- WO-A-85/03179
- DE-A1- 19 502 989
- US-A- 4 081 672
- US-B1- 6 211 524
- US-B1- 6 628 441

## Beschreibung

Die Erfindung betrifft ein optisches Bussystem nach dem Oberbegriff von Anspruch 1.

Ein derartiges Bussystem für eine schnelle Datenübertragung zwischen verschiedenen Komponenten eines Rechnersystems, wie z.B. Halbleiterchips, ist aus DE 40 06 510 A1 bekannt. Das Bussystem weist eine Lichtleiterplatte auf, die mehrere parallel zueinander verlaufende optische Wellenleiter hat, die jeweils einen optischen Sender mit einem optischen Detektor verbinden. Den Sendern ist eine Ansteuereinrichtung vorgeschaltet, die einen Eingangsanschluss hat, an dem ein elektrisches Signal anliegt, das als Trägersignal für die über das Bussystem zu übertragende Daten bzw. Informationen dient. Mit Hilfe der Ansteuereinrichtung wird die von den Sendern abgegebene optische Strahlung moduliert, um ein dem elektrischen Signal entsprechendes optisches Signal zu erzeugen. Zum Einkoppeln des so erhaltenen optischen Signals in die Wellenleiter weisen die Wellenleiter jeweils eine Einkoppelstelle auf, an der ein die optische Strahlung ablenkendes optisches Einkoppelelement, nämlich ein Prisma oder ein optisches Gitter angeordnet ist. Die so in die Wellenleiter eingekoppelte Strahlung wird unter Ausnutzung der Totalreflexion an den Grenzflächen des Wellenleiters in diesem zu einer Auskoppelstelle geführt, an der eine optische Auskoppeleinrichtung angeordnet ist, welche die optische Strahlung derart ablenkt, dass sie aus dem Wellenleiter in Richtung auf einen optischen Detektor austritt. Dieser ist mit einer Auswerteeinrichtung verbunden, welche die Daten bzw. Informationen aus dem Messsignal des Detektors ausliest.

Das Bussystem hat den Nachteil, dass die an den Wellenleitern vorgesehenen Einund Auskoppeleinrichtungen bei der Herstellung der Wellenleiter einen relativ großen Fertigungsaufwand erfordern, der beispielsweise das Bearbeiten des Wellenleiters an einer Frässtation umfassen kann. Da eine Fräsbearbeitung des Wellenleiters am Einbauort des Wellenleiters aus Platzgründen häufig nicht möglich ist, müssen die Wellenleiter für die einzelnen Busverbindungen vorgefertigt werden. In komplexen optoelektronischen Schaltungen, die mehrere unterschiedlich lange Wellenleiter und/oder Wellenleiter mit in unterschiedliche Richtungen weisenden Ein- bzw. Auskoppelstellen aufweisen, müssen daher zunächst die unterschiedlichen Wellenleiter hergestellt, bevorratet und dann jeweils lagerichtig der Monatgestelle zugeführt werden. Ungünstig ist außerdem, dass die optischen Ein- und Auskoppeleinrichtungen, beispielsweise wenn sie direkt an einem Halbleiterchip angeordnet sind, durch die in dem Halbleiterchip auftretende Verlustwärme Temperaturschwankungen unterliegen. Diese können eine thermische Verformung der Ein- und Auskoppeleinrichtungen und somit eine Veränderung deren optischen Eigenschaften zur Folge haben.

Aus WO 85/03179 A1 ist ferner ein Bussystem der eingangs genannten Art bekannt, das als optischen Wellenleiter eine Lichtleiterplatte aufweist, auf deren Außenflächen ein stark absorbierendes Grenzschichtmaterial aufgebracht ist. Als Ein- bzw. Auskoppeleinrichtungen sind Öffnungen in das Grenzschichtmaterial eingebracht, die einer Strahlungsquelle oder einem Detektor gegenüberliegen. Auch bei diesem Bussystem muss zunächst die Lichfleiterplatte mit den Ein- bzw. Auskoppeleinrichtungen vorgefertigt und dann an den Strahlungsquellen bzw. Detektoren positioniert werden. Die Lichtleiterplatte kann deshalb jeweils nur für eine bestimmte Anordnung der Strahlungsquellen und Detektoren verwendet werden.

Es besteht deshalb die Aufgabe, ein optisches Bussystem der Eingangs genannten Art zu schaffen das einfach und kostengünstig herstellbar ist.

Diese Aufgabe wird mit den Merkmalen des Anspruchs 1 gelöst.

Dabei erfolgt die Anregung der Lumineszenzstrahlung durch das Evaneszenzfeld der in dem Wellenleiter geführten optischen Strahlung. Der Wellenleiter kann bei der Fertigung des Bussystems auf einfache Weise mit mindestens einer Ein- bzw. Auskoppelstelle für die optische Strahlung bzw. die Lumineszenzstrahlung versehen werden, indem an der Oberfläche des Wellenleiters der Lumineszenzfarbstoff als Oberflächenbeschichtung aufgebracht wird. Dabei ist das Aufbringen der Oberflächenbeschichtung auch bei beengten Platzverhältnissen möglich, wenn der Wellenleiter in Montagestellung beispielsweise an einem Halbleiterchip positioniert ist. Der Wellenleiter kann also noch konfiguriert und an die jeweilige Einbausituation angepasst werden wenn er bereits montiert ist. Bei komplexen optoelektronischen Schaltungen, die mehrere unterschiedlich lange Wellenleiter und/oder Wellenleiter mit in unterschiedliche Richtungen weisenden Ein- bzw. Auskoppelstellen aufweisen, muss daher nur eine Art Wellenleiter bevorratet und den einzelnen Montagstellen zugeführt werden.

Der Lumineszenzfarbstoff ist im Wirkungsbereich der in dem Wellenleiter geführten optischen Strahlung angeordnet, so dass diese den Lumineszenzfarbstoff zur Aussendung einer Lumineszenzstrahlung anregt. Die Lumineszenzstrahlung koppelt aus dem Wellenleiter aus und wird dann mit Hilfe des Detektors erfasst und beispielsweise in ein entsprechendes elektrisches Signal umgesetzt. Unter Lumineszenz werden alle Emissionen von Strahlungsquanten verstanden, vor allem die Leuchterscheinungen, wie Fluoreszenz oder Phosphoreszenz, die Stoffe nach quantenhafter Anregung zeigen. Die optische Strahlung wird also detektiert, indem zunächst eine Lumineszenzstrahlung mit von der Wellenlänge der optischen Strahlung abweichender Wellenlänge erzeugt und diese dann gemessen wird. Dabei werden die in der optischen Strahlung enthaltenen, über das Bussystem zu übermittelnden Informationen zunächst auf die Lumineszenzstrahlung und dann von dieser auf das Messsignal des Detektors übertragen. Da die Abstrahlung der Lumineszenzstrahlung im Wesentlichen diffus erfolgt, koppelt zumindest ein Teil der Lumineszenzstrahlung aus dem Wellenleiter aus. In vorteilhafter Weise kann dadurch an der Auskoppelstelle ein teueres und aufwändiges Optikelement, wie z.B. eine Linse, ein Prisma und/oder ein optisches Gitter eingespart werden. Das Bussystem ist dadurch kostengünstig herstellbar.

Der Lumineszenzfarbstoff kann ein abwärts- und/oder aufwärts konvertierender Lumineszenz-Farbstoff sein. Bei einem abwärts konvertierenden Farbstoff ist die Wellenlänge der Lumineszenzstrahlung größer als die Wellenlänge der optischen Anregungs-Strahlung. Aufwärtskonvertierende Lumineszenz-Farbstoffe beziehen die für die Quantenemission benötigte Energie nicht aus einem einzigen sondern aus mehreren Quanteneffekten. Aufwärtskonvertierende Lumineszenz-Farbstoffe weisen daher im Vergleich zu abwärts konvertierenden Farbstoffen eine wesentlich größere Stokes-Verschiebung auf, bei welcher die Wellenlänge der Anregungs-strahlung beispielsweise etwa doppelt so groß sein kann wie die Wellenlänge der Lumineszenz-Strahlung.

Aus US-A 4 081 672 zwar bereits ein optischer Wellenleiter bekannt, der einen Fluoreszenzfarbstoff aufweist, der durch das in dem Lichtleiter geführte Licht zur Abgabe einer Fluoreszenzstrahlung angeregt wird, die nach allen Seiten abstrahlt. Bei diesem Wellenleiter ist der fluoreszierende Farbstoff jedoch im Inneren des Lichtleitervolumens angeordnet.

Die vorstehend genannte Aufgabe wird auch mit den Merkmalen des Anspruchs 2 gelöst. Dabei ist der Lumineszenzfarbstoff derart relativ zu dem Wellenleiter angeordnet, dass zumindest ein Teil der Lumineszenzstrahlung unter Ausnutzung der Totalreflexion an der Grenz- oder Mantelfläche des Wellenleiters in diesem geführt wird.

Die vorstehend genannte Aufgabe wird ferner mit den Merkmalen der Ansprüche 3 und 4 gelöst. Bei diesen Lösungen weist sowohl die Einkoppeleinrichtung als auch die Auskoppeleinrichtung einen Lumineszenzfarbstoff auf. Das Bussystem ermöglicht dadurch einen besonders einfachen und kostengünstigen Aufbau.

Bei einer bevorzugten Ausgestaltung der Erfindung ist zumindest ein Abschnitt des optischen Wellenleiters für eine mehrkanalige Datenübertragung vorgesehen, wobei jeder Übertragungskanal jeweils eine mit einer Ansteuereinrichtung verbundene Strahlungsquelle, eine Einkoppeleinrichtung, mindestens eine Auskoppeleinrichtung sowie wenigstens einen mit einer Auswerteeinrichtung verbundenen Detektor aufweist, wobei die Einkoppeleinrichtungen und/oder die Auskoppeleinrichtungen der einzelnen Kanäle jeweils mindestens einen Lumineszenzfarbstoff aufweisen, der durch die von der Strahlungsquelle des betreffenden Kanals ausgesandte Strahlung und/oder einer durch diese Strahlung angeregten Lumineszenzstrahlung zur Abgabe von Lumineszenzstrahlung angeregt wird, wobei die Detektoren jeweils derart relativ zu den ihnen zugeordneten Lumineszenzfarbstoffen angeordnet und/oder bezüglich ihrer spektralen Empfindlichkeit derart auf die ihnen zugeordneten Lumineszenzfarbstoffe abgestimmt sind, dass sie nur die Lumineszenzstrahlung des ihnen jeweils zugeordneten Kanals detektieren. Somit können auf mehreren, unterschiedlichen Wellenlängenbereichen zugeordneten Kanälen gleichzeitig Informationen über den Wellenleiter übertragen und an verschiedenen Stellen vorzugsweise mit Hilfe unterschiedlicher Lumineszenzfarbstoffe aus dem Wellenleiter ausgekoppelt werden. So kann beispielsweise die optische Strahlung für einen ersten Kanal, der eine Anregungswellenlänge von etwa 490 nm hat, mit dem Lumineszenzfarbstoff Fluorescin, die optische Strahlung für einen zweiten Kanal, der eine Anregungswellenlänge von etwa 535 nm hat, mit dem Lumineszenzfarbstoff Cy3, die optische Strahlung für einen dritten Kanal, der eine Anregungswellenlänge von etwa 650 nm hat, mit dem Lumineszenzfarbstoff Cy5 und die optische Strahlung für einen vierten Kanal, der eine Anregungswellenlänge von etwa 690 nm hat, mit dem Lumineszenzfarbstoff Cy7 aus dem Wellenleiter ausgekoppelt werden. Auf diese Weise lassen sich also pro Wellenleiter 4 Bit gleichzeitig übertragen. Im Vergleich zu einem Wellenleiter, über den nur ein Kanal übertragen wird, lässt sich durch die Verwendung von Lumineszenzfarbstoffen mit unterschiedlichen Anregungswellenlängen also auf einfache Weise eine höhere Datenübertragungsrate erzielen. In entsprechender Weise können bei Bedarf weitere Kanäle über den Wellenleiter übertragen werden.

Bei einer zweckmäßigen Ausgestaltung der Erfindung ist der mindestens eine Lumineszenzfarbstoff ein mineralischer Farbstoff, der vorzugsweise eine Seltenerden- und/oder Acetinidenverbindung aufweist. Derartige Farbstoffe sind beispielsweise bei der Dyomics GmbH in Jena / Deutschland erhältlich. Sie weisen eine relativ gute Stabilität und Temperaturbeständigkeit auf

Die Einkoppeleinrichtung kann ein optisches Gitter und/oder Prismen aufweisen, an dem (denen) die von der Strahlungsquelle ausgesandte Strahlung derart abgelenkt wird, dass sie unter Ausnutzung der Totalreflexion in dem Wellenleiter geführt wird. Das Gitter wird bei der Herstellung des Wellenleiters vorzugsweise durch einen Prägeschritt in die Oberfläche des Wellenleiters eingebracht.

Vorteilhaft ist, wenn das Bussystem mehrere der Anordnungen, jeweils bestehend zumindest aus der (den) Ansteuereinrichtung(en), der (den) Strahlungsquelle(n), dem Wellenleiter mit der mindestens einen Einkoppeleinrichtung und der wenigstens einen Auskoppeleinrichtung, dem (den) Detektor(en) und der (den) Auswerteeinrichtung(en) aufweist, und wenn die Wellenleiter der einzelnen Anordnungen an einem planaren, vorzugsweise etwa plattenförmigen Trägerteil etwa parallel zueinander verlaufend angeordnet sind. Das Bussystem ermöglicht dann eine noch größere Datenübertragungsrate.

Das Trägerteil besteht bevorzugt aus einem Werkstoff der eine geringere optische Dichte aufweist als der Werkstoff der Wellenleiter, wobei das Trägerteil an mindestens einer seiner Flachseiten nuten- oder grabenförmige Vertiefungen aufweist, und wobei die Wellenleiter in den Vertiefungen angeordnet sind, vorzugsweise in Form eines Polymerwerkstoffs, mit dem die Nuten befüllt sind. Bei der Fertigung der Wellenleiter kann dann zunächst das Trägerteil hergestellt werden, um danach den Wellenleiterwerkstoff in die Vertiefungen einzubringen. Dazu können die Vertiefungen mit vernetzbaren Molekülen, wie z.B. Monomeren, bedruckt werden, die anschließend durch Bestrahlung mit ultraviolettem Licht kreuzvernetzt werden.

Bei einer bevorzugten Ausführungsform der Erfindung verbindet der mindestens eine Wellenleiter zwei Halbleiterchips miteinander, wobei die mindestens eine Strahlungsquelle und der wenigstens eine Detektor als Halbleiterbauelemente in die Halbleiterchips integriert sind. Das Bussystem ermöglicht dadurch sehr kompakte Abmessungen. Die Strahlungsquelle kann eine organische Leuchtdiode (OLED) sein.

Bei einer vorteilhaften Ausgestaltung der Erfindung sind auf den Halbleiterchips vorzugsweise schuhförmig ausgebildete Steckkupplungselemente angeordnet, die jeweils eine Aufnahme aufweisen, in die jeweils ein Endbereich des Wellenleiters derart eingesetzt ist, dass mindestens eine in einen ersten Halbleiterchip integrierte Strahlungsquelle einer Einkoppeleinrichtung des Wellenleiters und wenigstens ein in einen zweiten Halbleiterchip integrierter Detektor einer Auskoppeleinrichtung des Wellenleiters zugewandt ist. Der Wellenleiter lässt sich dann bei der Fertigung des Bussystems auf einfache Weise mit den Halbleiterchips verbinden.

Erwähnt werden soll noch, dass der mindestens eine Lumineszenzfarbstoff auch in Abhängigkeit von einer Bedingung an der Auskoppeleinrichtung und/oder der Einkoppeleinrichtung angeordnet werden kann. So sind beispielsweise Anwendungen in der Biotechnologie denkbar, bei denen der Lumineszenzfarbstoff in Abhängigkeit von der Bindung eines Liganden an einen auf der Oberfläche des Wellenleiters immobilisierten bindungsspezifischen Rezeptor an einer Ein- und/oder Auskoppelstelle des Wellenleiters angeordnet wird. Eine Übertragung von Informationen über das Bussystem findet dann nur statt, wenn die Liganden an die Rezeptoren gebunden sind.

Nachfolgend sind Ausihrungsbeispiele der Erfindung anhand der Zeichnung näher erläutert. Es zeigen zum Teil stärker schematisiert:
- Fig. 1: eine Seitenansicht eines optischen Bussystems, das zwei Halbleiterchips miteinander verbindet,
- Fig. 2: eine Aufsicht auf das Bussystem,
- Fig. 3: eine Aufsicht auf eine Wellenleiteranordnung für ein Bussystem, das pro Wellenleiter einen undirektionalen Kanal aufweist,
- Fig. 4: eine Aufsicht auf eine Wellenleiteranordnung für ein Bussystem, das pro Wellenleiter zwei undirektionale Kanäle aufweist,
- Fig. 5: eine Aufsicht auf ein weiteres Ausführungsbeispiel einer Wellenleiteranordnung für ein Bussystem, das pro Wellenleiter einen Kanal aufweist, und
- Fig.6: einen Querschnitt durch eine Wellenleiteranordnung des Bussystems, bestehend aus einem platten- oder bandförmigen Trägerteil, an dem mehrere parallel zueinander verlaufende Wellenleiter angeordnet sind.

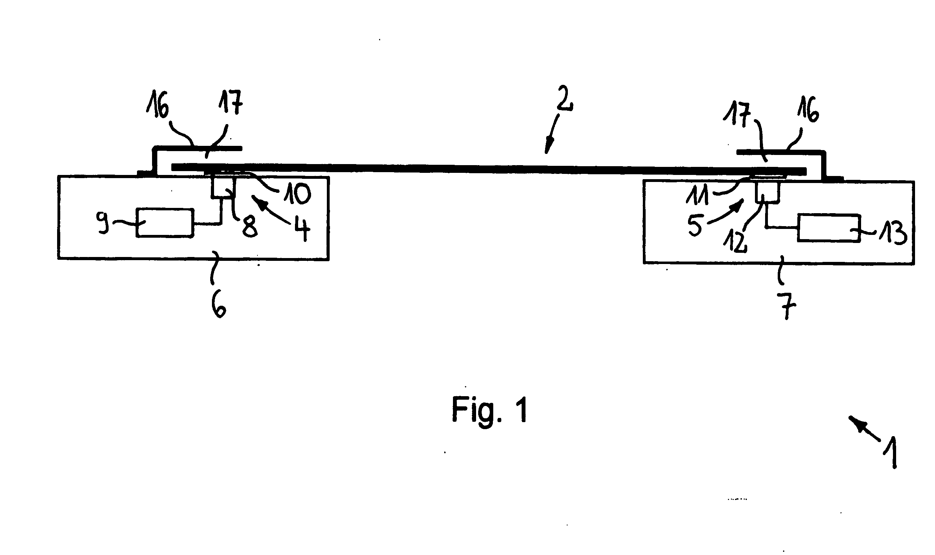

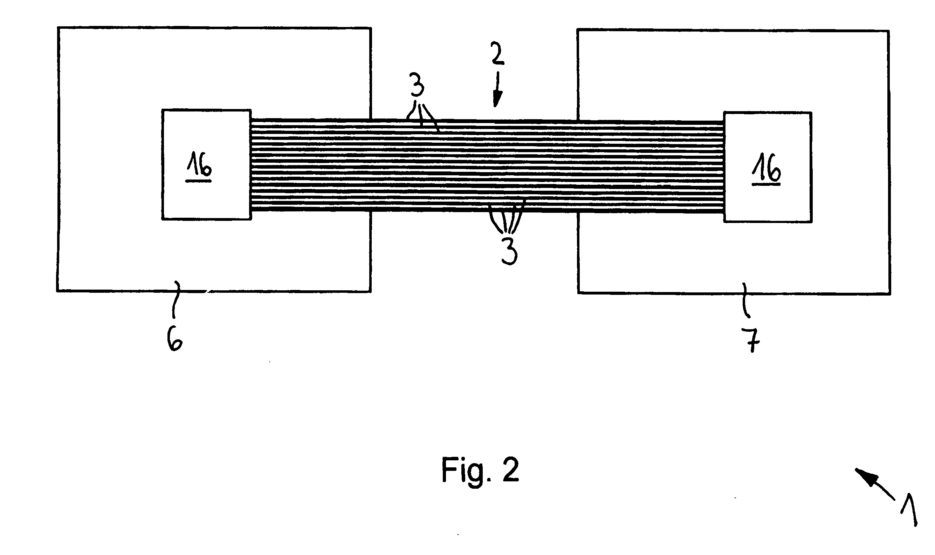

Ein in Fig. 1 im Ganzen mit 1 bezeichnetes optisches Bussystem hat eine Wellenleiteranordnung 2, die mehrere parallel zueinander verlaufende Wellenleiter 3 aufweist. Jedem Wellenleiter 3 ist jeweils eine optische Einkoppeleinrichtung 4 und eine Auskoppeleinrichtung 5 zugeordnet, die in Längserstreckungsrichtung der Wellenleiteranordnung 2 von der Einkoppeleinrichtung 4 beabstandet ist. In Fig. 1 und 2 ist erkennbar, dass die Wellenleiteranordnung 2 zwei Halbleiterchips 6, 7 miteinander verbindet.

Die Einkoppeleinrichtungen 4 haben jeweils eine optische Strahlungsquelle 8, die als Leuchtdiode ausgebildet und in den Halbleiterchip 6 integriert ist. Zum Übertragen von Informationen über den Wellenleiter 3 ist die Strahlungsquelle 8 mit einer in der Zeichnung nur schematisch dargestellten Ansteuereinrichtung 9 verbunden, die als Halbleiterschaltung in den Halbleiterchip 6 integriert ist. Die Ansteuereinrichtung 9 moduliert die von der Strahlungsquelle 8 ausgesandte optische Strahlung entsprechend einem elektrischen Eingangssignal, das in dem Halbleiterchip 6 bereitgestellt wird und als Trägersignal für die über das Bussystem 1 zu übertragenden Informationen dient.

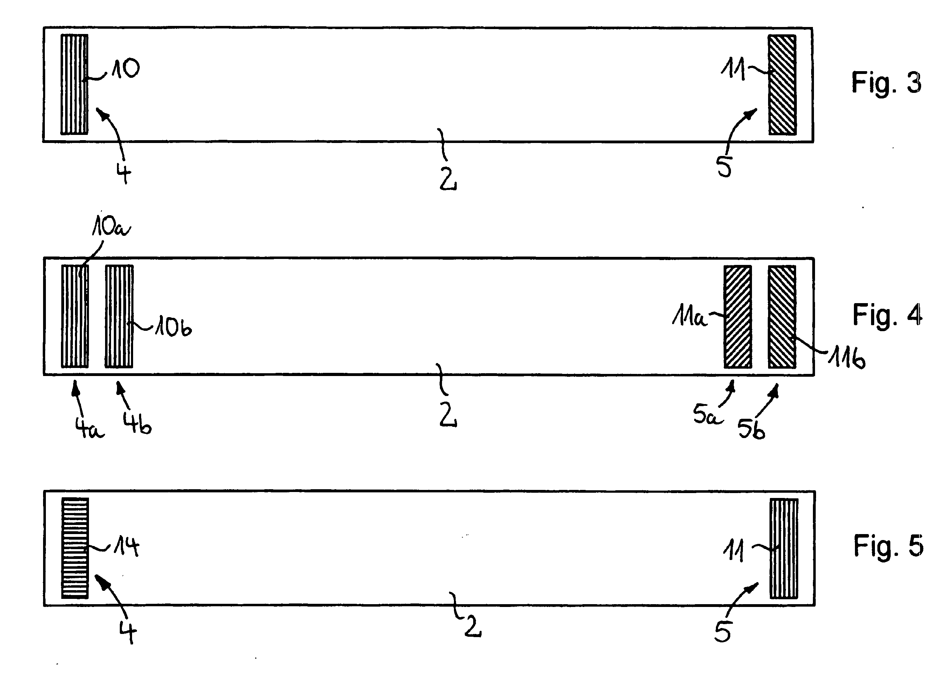

Bei dem in Fig. 3 gezeigten Ausführungsbeispiel weisen die Wellenleiter 3 im Abstrahlbereich der ihnen jeweils zugeordneten Strahlungsquelle 8 an ihrer Oberfläche jeweils ein optisches Gitter 10 auf, welches die von der Strahlungsquelle 8 ausgesandte Strahlung derart ablenkt, dass sie unter Ausnutzung der Totalreflexion an den Grenzflächen des Wellenleiters 3 in diesem zu einer Auskoppelstelle geführt wird.

An der Auskoppelstelle weist die Auskoppeleinrichtung 5 einen Lumineszenzfarbstoff 11 auf, der als Beschichtung auf die Oberfläche des Wellenleiters 3 aufgebracht ist. Der Lumineszenzfarbstoff 11 ist im Evaneszenzfeld der in dem Wellenleiter 3 geführten, von der Strahlungsquelle 8 ausgesandte optische Strahlung angeordnet und wird durch diese zur Abgabe einer Lumineszenzstrahlung angeregt, deren Wellenlänge sich von der Wellenlänge der optischen Strahlung unterscheidet. Dabei wird die Modulation der optischen Strahlung in eine entsprechende Modulation der Lumineszenzstrahlung umgesetzt, d.h. die in der optischen Strahlung enthaltenen Informationen werden auf die Lumineszenzstrahlung übertragen.

Im Abstrahlbereich der Lumineszenzstrahlung weist die Auskoppeleinrichtung 5 jeweils einen optischen Detektor 12 auf, der für die Lumineszenzstrahlung empfindlich ist. Der Detektor 12 ist mit einer Auswerteeinrichtung 13 verbunden, welche die in der Lumineszenzstrahlung gespeicherten Informationen ausliest und in Form eines entsprechenden elektrischen Signals zur weiteren Verarbeitung auf dem Halbleiterchip 7 bereitstellt.

Bei dem in Fig. 4 gezeigten Ausführungsbeispiel sind jedem Wellenleiter 3 jeweils zwei Einkoppeleinrichtungen 4a, 4b und zwei Auskoppeleinrichtungen 5a, 5b zugeordnet, die in Längserstreckungsrichtung des Wellenleiters 3 hintereinander angeordnet sind. Die Einkoppeleinrichtungen 4a, 4b haben jeweils eine mit einer Ansteuereinrichtung 9 verbundene Strahlungsquelle 8 und ein dieser zugeordnetes ein optisches Gitter 10a, 10b, das die von der Strahlungsquelle 8 ausgesandte Strahlung in den Wellenleiter 3 einkoppelt. Die beiden Strahlungsquellen 8 senden optische Strahlung in unterschiedlichen Wellenlängenbereichen aus.

Die beiden Auskoppeleinrichtungen 5a, 5b jeweils einen Lumineszenzfarbstoff 11a, 11 b auf, der als Beschichtung auf die Oberfläche des Wellenleiters 3 aufgebracht ist. Die Lumineszenzfarbstoffe 11 a, 11 b sind im Evaneszenzfeld der optischen Strahlung beider Strahlungsquellen 8 angeordnet. Ein erster Lumineszenzfarbstoff 11 a wird durch die von einer ersten Strahlungsquelle 8 ausgesandte Strahlung und ein zweiter Lumineszenzfarbstoff 11b durch die von einer zweiten Strahlungsquelle 8 ausgesandte Strahlung zur Abgabe von Lumineszenzstrahlung angeregt. Letztere wird mit dem optischen Detektor 12 gemessen. Mit dem in Fig. 4 gezeigten Bussystem können über jeden Wellenleiter des Bussystems jeweils zwei Kanäle gleichzeitig übertragen werden.

Bei dem Ausführungsbeispiel gemäß Fig. 4 können die zweite Einkoppeleinrichtung 4b und die zweite Auskoppeleinrichtung 5b auch miteinander vertauscht sein. Dadurch wird eine bidirektionale Datenübertragung ermöglicht, bei der die Daten in die eine Richtung über die erste Einkoppeleinrichtung 4a und die erste Auskoppeleinrichtung 5a und in der anderen Richtung über die zweite Einkoppeleinrichtung 4b und die zweite Auskoppeleinrichtung 5b übertragen. Im Bedarfsfall können für die einzelnen Wellenleiter weitere Kanäle vorgesehen sein, die jeweils eine Einkoppeleinrichtung 4, 4a, 4b und eine Auskoppeleinrichtung 5, 5a, 5b umfassen.

Bei dem in Fig. 5 gezeigten Ausihrungsbeispiel weisen die Wellenleiter 3 im Abstrahlbereich der ihnen jeweils zugeordneten Strahlungsquelle 8 an ihrer Oberfläche jeweils einen ersten Lumineszenzfarbstoff 14 auf, der durch die von der Strahlungsquelle 8 ausgesandte Strahlung zur Abgabe einer ersten Lumineszenzstrahlung angeregt wird, die eine andere Wellenlänge aufweist als die Strahlung der Strahlungsquelle 8. Der erste Lumineszenzfarbstoff 14 ist derart an dem Wellenleiter 3 angeordnet, dass zumindest ein Teil der ersten Lumineszenzstrahlung über den Wellenleiter 3 zu dem optischen Detektor 12 geleitet wird.

Die Auskoppeleinrichtung 5 weist einen zweiten Lumineszenzfarbstoff 11 auf, der als Beschichtung auf die Oberfläche des Wellenleiters 3 aufgebracht ist. Der zweite Lumineszenzfarbstoff 11 ist im Evaneszenzfeld der ersten Lumineszenzstrahlung angeordnet. Die Wellenlänge der ersten Lumineszenzstrahlung ist derart auf den detektorseitigen zweiten Lumineszenzfarbstoff 14 abgestimmt, dass dieser durch die erste Lumineszenzstrahlung zur Abgabe einer zweiten Lumineszenzstrahlung angeregt wird. Letztere wird von dem optischen Detektor 12 empfangen. Das entsprechende Messsignal wird an die Auswerteeinrichtung 13 weitergeleitet.
Anstelle des detektorseitigen Lumineszenzfarbstoffs 14 kann auch ein optisches Auskoppelgitter vorgesehen sein. In diesem Fall ist der Detektor 12 für die von dem senderseitigen Lumineszenzfarbstoff 14 abgegebene Lumineszenzstrahlung empfindlich.

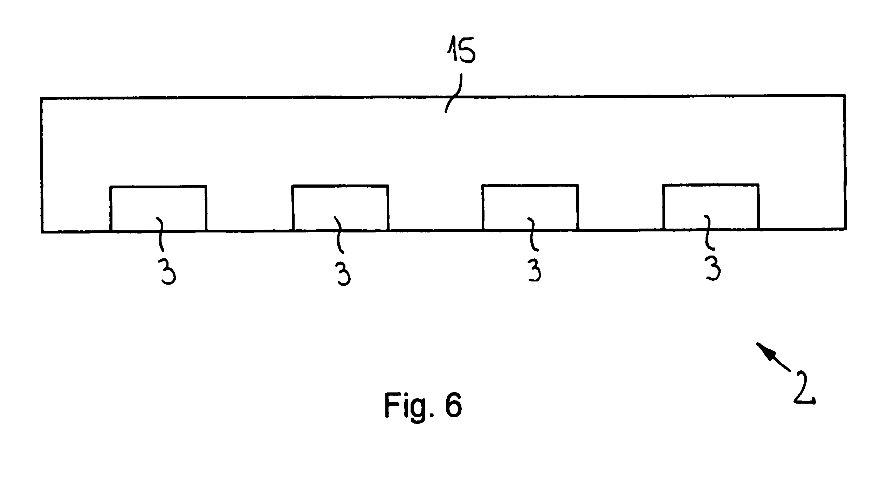

In Fig. 6 ist erkennbar, dass die Wellenleiteranordnung 2 mehrere parallel zueinander verlaufende Wellenleiter 3 aufweist, die an einem etwa platten- oder streifenförmigen Trägerteil 15 angeordnet sind. Das Trägerteil 15 hat an einer seiner Flachseiten mehrere parallel zueinander verlaufende nutenförmige Vertiefungen mit etwa rechteckigem Querschnitt. Die Vertiefungen sind mit einem Wellenleiterwerkstoff, wie z.B. einem thermoplastischen, glasklaren Polymerwerkstoff, befüllt, der größere optische Dichte aufweist als der Werkstoff des Trägerteils 15. Dadurch unterliegt die in den Wellenleitern 3 geführte optische Strahlung an den Grenzflächen zwischen den Wellenleitern 3 und dem Trägerteil 15 der Totalreflexion.

In Fig. 1 und 2 ist noch erkennbar, dass auf den Halbleiterchips 6, 7 Steckkupplungselemente 16 angeordnet sind, die jeweils eine taschenförmige Aufnahme 17 aufweisen, in die jeweils ein Endbereich der Wellenleiteranordnung 2 eingreift. Die Wellenleiteranordnung 2 ist mit in der Zeichnung nicht näher dargestellten Rastmitteln derart mit den Steckkupplungselementen 16 verrastet, dass die Strahlungsquellen 8 den ihnen jeweils zugeordneten Einkoppelstellen (Gitter 10 bzw. Lumineszenzfarbstoff 14) der Wellenleiter 3 und die Detektoren 12 den ihnen jeweils zugeordneten Auskoppelstellen (Lumineszenzfarbstoff 11) der Wellenleiter 3 gegenüberliegen.

## Patentansprüche

1. Optisches Bussystem (1) mit mindestens einem, zumindest eine optische Einkoppeleinrichtung (4, 4a, 4b) und wenigstens eine davon beabstandete Auskoppeleinrichtung (5, 5a, 5b) aufweisenden optischen Wellenleiter (3), mit mindestens einer der Einkoppeleinrichtung (4, 4a, 4b) zugeordneten optischen Strahlungsquelle (8) zum Einkoppeln von optischer Strahlung in den Wellenleiter (3) und mit wenigstens einem der Auskoppeleinrichtung (5, 5a, 5b) zugeordneten optischen Detektor (12) zum Empfangen der aus dem Wellenleiter (3) ausgekoppelten Strahlung, wobei die Strahlungsquelle (8) zum Übertragen von Informationen über den Wellenleiter (3) mit einer Ansteuereinrichtung (9) und der Detektor (12) mit einer Auswerteeinrichtung (13) verbunden sind, **dadurch gekennzeichnet, dass** die Auskoppeleinrichtung (5, 5a, 5b) mindestens einen Lumineszenzfarbstoff (11, 11 a, 11b) aufweist, der als Oberflächenbeschichtung ausgebildet und auf einer Grenzfläche des optischen Wellenleiters (3) angeordnet Ist, dass die Strahlungsquelle (8) zur Aussendung einer optischen Strahlung ausgebildet ist, die den Lumineszenzfarbstoff (11, 11a,11b) zur Abgabe von Lumineszenzstrahlung angeregt, und dass der optische Detektor (12) im Abstrohlbereich der Lumineszenzstrahlung angeordnet und für die Lumineszenzstrahlung empfindlich ist.

2. Optisches Bussystem (1) nach dem Oberbegriff von Anspruch 1, insbesondere nach Anspruch 1, **dadurch gekennzeichnet dass** die Einkoppeleinrichtung (4) mindestens einen Lumineszenzfarbstoff (14) aufweist, der als Oberflächenbeschichtung ausgebildet und auf einer Grenzfläche des optischen Wellenleiters (3) angeordnet ist, dass die Strahlungsquelle (8) zur Aussendung einer optischer Strahlung ausgebildet ist, die den Lumineszenzfarbstoff (14) zur Abgabe von Lumineszenzstrahlung angeregt, dass der Lumineszenzfarbstoff (14) derart angeordnet ist, dass zumindest ein Teil der Lumineszenzstrahlung über den Wellenleiter (3) zu dem optischen Detektor (12) geleitet wird, und dass der optische Detektor (12) für die Lumineszenzstrahlung empfindlich ist.

3. Optisches Bussystem (1) nach dem Oberbegriff von Anspruch 1, **dadurch gekennzeichnet dass** die Einkoppeleinrichtung (4) mindestens einen ersten Lumineszenzfarbstoff (14) aufweist, der als Oberflächenbeschichtung ausgebildet und auf einer Grenzfläche des optischen Wellenleiters (3) angeordnet ist, dass die Strahlungsquelle (8) zur Aussendung einer ersten optischer Strahlung ausgebildet ist, die den ersten Lumineszenzfarbstoff (14) zur Abgabe von Lumineszenzstrahlung angeregt, dass der erste Lumineszenzfarbstoff (14) derart angeordnet ist, dass zumindest ein Teil der ersten Lumineszenzstrahlung über den Wellenleiter (3) zu mindestens einem zweiten Lumineszenzfarbstoff (11, 11a, 11b) der Auskoppeleinrichtung (5, 5a, 5b) geleitet wird, dass die erste Lumineszenzstrahlung derart auf den zweiten Lumineszenzfarbstoff (11, 11 a, 11 b) abgestimmt ist, dass dieser durch die erste Lumineszenzstrahlung zur Abgabe einer zweiten Lumineszenzstrahlung angeregt wird, und dass der optische Detektor (12) im Abstrahlbereich der zweiten Lumineszenzstrahlung angeordnet und für diese empfindlich ist.

4. Optisches Bussystem (1) nach dem Oberbegriff von Anspruch 1, **dadurch gekennzeichnet, dass** die Einkoppeleinrichtung (4) mindestens einen ersten Lumineszenzfarbstoff (14) aufweist, dass die Strahlungsquelle (8) zur Aussendung einer ersten optischer Strahlung ausgebildet ist, die den ersten Lumineszenzfarbstoff (14) zur Abgabe von Lumineszenzstrahlung angeregt, dass der erste Lumineszenzfarbstoff (14) derart angeordnet ist, dass zumindest ein Teil der ersten Lumineszenzstrahlung über den Wellenleiter (3) zu mindestens einem als Oberflächenbeschichtung ausgebildeten und auf einer Grenzfläche des optischen Wellenleiters (3) angeordneten zweiten Lumineszenzfarbstoff (11, 11a, 11b) der Auskoppeleinrichtung (5, 5a, 5b) geleitet wird, dass die erste Lumineszenzstrahlung derart auf den zweiten Lumineszenzfarbstoff (11, 11a, 11b) abgestimmt ist, dass dieser durch die erste Lumineszenzstrahlung zur Abgabe einer zweiten Lumineszenzstrahlung angeregt wird, und dass der optische Detektor (12) im Abstrahlbereich der zweiten Lumineszenzstrahlung angeordnetund für diese empfindlich ist.

5. Optisches Bussystem (1) nach einem der Ansprüche 1 bis 4, **dadurch gekennzeichnet, dass** zumindest ein Abschnitt des optischen Wellenleiters (3) für eine mehrkanalige Datenübertragung vorgesehen ist, dass jeder Übertragungskanal jeweils eine mit einer Ansteuereinrichtung (9) verbundene Strahlungsquelle (8), eine Einkoppeleinrichtung (4a, 4b), mindestens eine Auskoppeleinrichtung (5a, 5b) sowie wenigstens einen mit einer Auswerteeinrichtung (13) verbundenen Detektor (12) aufweist dass die Einkoppeleinrichtungen (4a, 4b) und/oder die Auskoppeleinrichtungen (5, 5a, 5b) der einzelnen Kanäle jeweils mindestens einen Lumineszenzfarbstoff (11a,11b) aufweisen, der durch die von der Strahlungsquelle (8) des betreffenden Kanals ausgesandte Strahlung und/oder einer durch diese Strahlung angeregten Lumineszenzstrahlung zur Abgabe von Lumineszenzstrahlung angeregt wird, dass die Detektoren (12) jeweils derart relativ zu den ihnen zugeordneten Lumineszenzfarbstoffen (11a, 11b) angeordnet und/oder bezüglich ihrer spektralen Empfindlichkeit derart auf die ihnen zugeordneten Lumineszenz-farbstoffe (11a, 11b) abgestimmt sind, dass sie nur die Lumineszenzstrahlung des ihnen jeweils zugeordneten Kanals detektieren.

6. Optisches Bussystem (1) nach einem der Ansprüche 1 bis 5, **dadurch gekennzeichnet, dass** der mindestens eine Lumineszenzfarbstoff (11, 11a, 11b, 14) ein mineralischer Farbstoff ist, der vorzugsweise eine Seltenerden- und/oder Acetinidenverbindung aufweist.

7. Optisches Bussystem (1) nach einem der Ansprüche 1 bis 6, **dadurch gekennzeichnet, dass** die Einkoppeleinrichtung (4, 4a, 4b) ein optisches Gitter (10) und/oder Prismen aufweist, an dem (denen) die von der Strahlungsquelle (8) ausgesandte Strahlung derart abgelenkt wird, dass sie unter Ausnutzung der Totalreflexion in dem Wellenleiter (3) geführt wird.

8. Optisches Bussystem (1) nach einem der Ansprüche 1 bis 7, **dadurch gekennzeichnet, dass** es mehrere der Anordnungen, jeweils bestehend zumindest aus der (den) Ansteuereinrichtung(en) (9), der (den) Strahlungsquelle(n) (8), dem Wellenleiter (3) mit der mindestens einen Einkoppeleinrichtung (4, 4a, 4b) und der wenigstens einen Auskoppeleinrichtung (5,5a, 5b), dem (den) Detektor(en) (12) und der (den) Auswerteeinrichtung(en) (13, 13a, 1 3b) aufweist, und dass die Wellenleiter (3) der einzelnen Anordnungen an einem planaren, vorzugsweise etwa plattenförmigen Trägerteil (15) etwa parallel zueinander verlaufend angeordnet sind.

9. Optisches Bussystem (1) nach einem der Ansprüche 1 bis 8, **dadurch gekennzeichnet, dass** das Trägerteil (15) aus einem Werkstoff besteht, der eine geringere optische Dichte aufweist als der Werkstoff der Wellenleiter (3), dass das Trägerteil (15) an mindestens einer seiner Flachseiten nuten- oder grabenförmige Vertiefungen aufweist, und dass die Wellenleiter (3) in den Vertiefungen angeordnet sind, vorzugsweise in Form eines Polymerwerkstoffs, mit dem die Nuten befüllt sind.

10. Optisches Bussystem (1) nach einem der Ansprüche 1 bis 9, **dadurch gekennzeichnet, dass** der mindestens eine Wellenleiter (3) zwei Halbleiterchips (6, 7) miteinander verbindet, und dass die mindestens eine Strahlungsquelle (8) und der wenigstens eine Detektor (12) als Halbleiterbauelemente in die Halbleiterchips (6, 7) integriert sind.

11. Optisches Bussystem (1) nach einem der Ansprüche 1 bis 10, **dadurch gekennzeichnet, dass** auf den Halbleiterchips (6, 7) vorzugsweise schuhförmig ausgebildete Steckkupplungselemente (16) angeordnet sind, die jeweils eine Aufnahme (17) aufweisen, in die jeweils ein Endbereich des Wellenleiters (3) derart eingesetzt ist, dass mindestens eine in einen ersten Halbleiterchip (6, 7) integrierte Strahlungsquelle (8) einer Einkoppeleinrichtung (4, 4a, 4b) des Wellenleiters und wenigstens ein in einen zweiten Halbleiterchip (7, 6) integrierter Detektor (12) einer Auskoppeleinrichtung (5, 5a, 5b) des Wellenleiters (3) zugewandt ist.

## Claims

1. Optical bus system (1) comprising at least one optical waveguide (3) having at least one optical coupling device (4, 4a, 4b) and at least one decoupling device (5, 5a, 5b) spaced apart therefrom, comprising at least one optical radiation source (8), assigned to the coupling device (4, 4a, 4b), for coupling optical radiation into the waveguide (3), and comprising at least one optical detector (12), assigned to the decoupling device (5, 5a, 5b), for receiving the radiation coupled out from the waveguide (3), the radiation source (8) being connected to a drive device (9) for the transmission of information over the waveguide (3), and a detector (12) being connected to an evaluation device (13), **characterized in that** the decoupling device (5, 5a, 5b) has at least one luminescent dye (11, 11a, 11b) which is conceived as a surface coating and is arranged on a boundary surface of the optical waveguide (3), and **in that** a radiation source (8) is designed for emitting an optical radiation which excites the luminescent dye (11, 11a, 11b) to output luminescent radiation, and **in that** the optical detector (12) is arranged in the emission area of the luminescent radiation and is sensitive to the luminescent radiation.

2. Optical bus system (1) according to the preamble of Claim 1, in particular according to Claim 1, **characterized in that** the coupling device (4) has at least one luminescent dye (14) which is conceived as a surface coating and is arranged on a boundary surface of the optical waveguide (3), and **in that** the radiation source (8) is designed for emitting an optical radiation which excites the luminescent dye (14) to output luminescent radiation, **in that** the luminescent dye (14) is arranged in such a way that at least a portion of the luminescent radiation is guided over the waveguide (3) to the optical detector (12), and **in that** the optical detector (12) is sensitive to the luminescent radiation.

3. Optical bus system (1) according to the preamble of Claim 1, **characterized in that** the coupling device (4) has at least a first luminescent dye (14) which is conceived as a surface coating and is arranged on a boundary surface of the optical waveguide (3), and **in that** a radiation source (8) is designed for emitting a first optical radiation which excites the first luminescent dye (14) to output luminescent radiation, **in that** the first luminescent dye (14) is arranged in such a way that at least a portion of the first luminescent radiation is guided over the waveguide (3) to at least one second luminescent dye (11, 11a, 11b) of the decoupling device (5, 5a, 5b), **in that** a first luminescent radiation is tuned to the second luminescent dye (11, 11a, 11b) in such a way that the latter is excited by the first luminescent radiation to output a second luminescent radiation, and **in that** the optical detector (12), is arranged in the emission area of the second luminescent radiation and is sensitive thereto.

4. Optical bus system (1) according to the preamble of Claim 1, **characterized in that** the coupling device (4) has at least a first luminescent dye (14), **in that** the radiation source (8) is designed for emitting a first optical radiation which excites the first luminescent dye (14) to output luminescent radiation, **in that** the first luminescent dye (14) is arranged in such a way that at least a portion of the first luminescent radiation is guided over the waveguide (3) to at least a second luminescent dye (11, 11a, 11b), conceived as surface coating and arranged on a boundary surface of the optical waveguide (3), of the decoupling device (5, 5a, 5b), **in that** the first luminescent radiation is tuned to the second luminescent dye (11, 11a, 11b) in such a way that the latter is excited by the first luminescent radiation to output a second luminescent radiation, and **in that** the optical detector (12), is arranged in the emission area of the second luminescent radiation and is sensitive thereto.

5. Optical bus system (1) according to one of Claims 1 to 4, **characterized in that** at least one section of the optical waveguide (3) is provided for multi-channel data transmission, **in that** each transmission channel respectively has a radiation source (8) connected to a drive device (9), a coupling device (4a, 4b), at least one decoupling device (5a, 5b) and at least one detector (12) connected to an evaluation device (13), **in that** the coupling devices (4a, 4b) and/or the decoupling devices (5, 5a, 5b) of the individual channels respectively have at least one luminescent dye (11a, 11b) which is excited to output luminescent radiation by the radiation emitted by the radiation source (8) of the relevant channel and/or a luminescent radiation excited by this radiation, and **in that** the detectors (12) are respectively arranged in such a way relative to the luminescent dyes (11a, 11b) assigned to them, and/or are tuned with reference to their spectral sensitivity to the luminescent dyes (11a, 11b) assigned to them in such a way that they detect only the luminescent radiation of the channel respectively assigned to them.

6. Optical bus system (1) according to one of Claims 1 to 5, **characterized in that** the at least one luminescent dye (11, 11a, 11b, 14) is a mineral dye which preferably has a rare earth compound and/or actinide compound.

7. Optical bus system (1) according to one of Claims 1 to 6, **characterized in that** the coupling device (4, 4a, 4b) has an optical grating (10) and/or prisms at which the radiation emitted by the radiation source (8) is deflected in such way that it is guided in the waveguide (3) through the employment of total reflection.

8. Optical bus system (1) according to one of Claims 1 to 7, **characterized in that** it has a number of the arrangements, respectively comprising at least the drive device(s) (9), the radiation source(s) (8), the waveguide (3) with the at least one coupling device (4, 4a, 4b) and the at least one decoupling device (5, 5a, 5b), the detector(s) (12) and the evaluation device(s) (13, 13a, 13b), and **in that** the waveguides (3) of the individual arrangements are arranged in a fashion running approximately parallel to one another on a planar, preferably approximately plate-shaped carrier part (15).

9. Optical bus system (1) according to one of Claims 1 to 8, **characterized in that** the carrier part (15) consists of a material which has a lower optical density than the material of the waveguides (3), **in that** the carrier part (15) has groove-shaped or trench-shaped depressions on at least one of its flat sides, and **in that** the waveguides (3) are arranged in the depressions, preferably in a form of a polymer material with which the grooves are filled.

10. Optical bus system (1) according to one of Claims 1 to 9, **characterized in that** the at least one waveguide (3) interconnects two semiconductor chips (6, 7), and **in that** the at least one radiation source (8) and the at least one detector (12) are integrated as semiconductor components into the semiconductor chips (6, 7).

11. Optical bus system (1) according to one of Claims 1 to 10, **characterized in that** arranged on the semiconductor chips (6, 7) are plug-in connector elements (16) which are preferably of shoe-shaped design and respectively have a holder (17) into which an end region of the waveguide (3) is respectively inserted in such a way that at least one radiation source (8) integrated into a first semiconductor chip (6, 7) faces a coupling device (4, 4a, 4b) of the waveguide, and at least one detector (12) integrated into a second semiconductor chip (7, 6) faces a decoupling device (5, 5a, 5b) of the waveguide (3).

## Revendications

1. Système de bus optique (1) comportant au moins un guide d'onde optique (3) comprenant au moins un dispositif de couplage (4, 4a, 4b) et au moins un dispositif de découplage (5, 5a, 5b) espacé de celui-ci, avec au moins une source de rayonnement optique (8) associée au dispositif de couplage (4, 4a, 4b) pour le couplage d'un rayonnement optique dans le guide d'onde (3) et avec au moins un détecteur optique (12) associé au dispositif de découplage (5, 5a, 5b) pour la réception du rayonnement découplé du guide d'onde (3), dans lequel la source de rayonnement (8) est raccordée à un dispositif de commande (9) et le détecteur est raccordé à un dispositif d'exploitation (13) pour la transmission d'informations par le guide d'onde (3), **caractérisé en ce que** le dispositif de découplage (5, 5a, 5b) comporte au moins un colorant luminescent (11, 11a, 11b), qui forme un revêtement de surface et est disposé sur une surface limite du guide d'onde optique (3), **en ce que** la source de rayonnement (8) est conçue pour émettre un rayonnement optique qui excite le colorant luminescent (11, 11a, 11b) pour produire un rayonnement luminescent, et **en ce que** le détecteur optique (12) est disposé dans la zone de rayonnement du rayonnement luminescent et est sensible au rayonnement luminescent.

2. Système de bus optique (1) selon le préambule de la revendication 1, en particulier selon la revendication 1, **caractérisé en ce que** le dispositif de couplage (4) comprend au moins un colorant luminescent (14), qui forme un revêtement de surface et qui est disposé sur une surface limite du guide d'onde optique (3), **en ce que** la source de rayonnement (8) est conçue pour émettre un rayonnement optique qui excite le colorant luminescent (14) pour produire un rayonnement luminescent, **en ce que** le colorant luminescent (14) est disposé de telle manière qu'au moins une partie du rayonnement luminescent soit conduite par le guide d'onde (3) au détecteur optique (12), et **en ce que** le détecteur optique (12) est sensible au rayonnement luminescent.

3. Système de bus optique (1) selon le préambule de la revendication 1, **caractérisé en ce que** le dispositif de couplage (4) comporte au moins un premier colorant luminescent (14), qui forme un revêtement de surface et qui est disposé sur une surface limite du guide d'onde optique (3), **en ce que** la source de rayonnement (8) est conçue pour émettre un premier rayonnement optique qui excite le premier colorant luminescent (14) pour produire un rayonnement luminescent, **en ce que** le premier colorant luminescent (14) est disposé de telle manière qu'au moins une partie du premier rayonnement luminescent soit conduite par le guide d'onde à au moins un deuxième colorant luminescent (11, 11a, 11b) du dispositif de découplage (5, 5a, 5b), **en ce que** le premier rayonnement luminescent est accordé au deuxième colorant luminescent (11, 11a, 11b) de telle manière que celui-ci soit excité par le premier rayonnement luminescent pour émettre un deuxième rayonnement luminescent, et **en ce que** le détecteur optique (12) est disposé dans la zone de rayonnement du deuxième rayonnement luminescent et est sensible à ce dernier.

4. Système de bus optique (1) selon le préambule de la revendication 1, **caractérisé en ce que** le dispositif de couplage (4) comporte au moins un premier colorant luminescent (14), **en ce que** la source de rayonnement (8) est conçue pour émettre un premier rayonnement optique qui excite le premier colorant luminescent (14) pour produire un rayonnement luminescent, **en ce que** le premier colorant luminescent (14) est disposé de telle manière qu'au moins une partie du premier rayonnement luminescent soit conduite par le guide d'onde (3) à au moins un deuxième colorant luminescent (11, 11a, 11b) du dispositif de découplage (5, 5a, 5b) formant un revêtement de surface et disposé sur une surface limite du guide d'onde optique (3), **en ce que** le premier rayonnement luminescent est accordé au deuxième colorant luminescent (11, 11a, 11b) de telle manière que celui-ci soit excité par le premier rayonnement luminescent pour produire un deuxième rayonnement luminescent, et **en ce que** le détecteur optique (12) est disposé dans la zone de rayonnement du deuxième rayonnement luminescent et est sensible à celui-ci.

5. Système de bus optique (1) selon l'une quelconque des revendications 1 à 4, **caractérisé en ce qu'**au moins un segment du guide d'onde optique (3) est prévu pour une transmission de données à plusieurs canaux, **en ce que** chaque canal de transmission comprend chaque fois une source de rayonnement (8) reliée à un dispositif de commande (9), un dispositif de couplage (4a, 4b), au moins un dispositif de découplage (5a, 5b) ainsi qu'au moins un détecteur (12) relié à un dispositif d'exploitation (13), **en ce que** le dispositif de couplage (4a, 4b) et/ou les dispositifs de découplage (5, 5a, 5b) des canaux individuels comportent chaque fois au moins un colorant luminescent (11a, 11b) qui est excité par le rayonnement émis par la source de rayonnement (8) du canal concerné et/ou par un rayonnement luminescent excité par ce rayonnement pour produire un rayonnement luminescent, **en ce que** les détecteurs (12) sont chaque fois disposés par rapport aux colorants luminescents (11a, 11b) qui leur sont associés et/ou sont accordés aux colorants luminescents (11a, 11b) qui leur sont associés, en ce qui concerne leur sensibilité spectrale, de telle manière qu'ils ne détectent que le rayonnement luminescent du canal qui leur est respectivement associé.

6. Système de bus optique (1) selon l'une quelconque des revendications 1 à 5, **caractérisé en ce que** l'au moins un colorant luminescent (11, 11a, 11b, 14) est un colorant minéral, qui comprend de préférence un composé de terres rares et/ou d'actinides.

7. Système de bus optique (1) selon l'une quelconque des revendications 1 à 6, **caractérisé en ce que** le dispositif de couplage (4, 4a, 4b) comporte une grille optique (10) et/ou des prismes, sur laquelle (lesquels) le rayonnement émis par la source de rayonnement (8) est dévié de telle manière qu'il soit conduit dans le guide d'onde (3) en utilisant la réflexion totale.

8. Système de bus optique (1) selon l'une quelconque des revendications 1 à 7, **caractérisé en ce qu'**il comporte plusieurs des dispositifs, composés chaque fois au moins du(des) dispositif(s) de commande (9), de la (des) source(s) de rayonnement (8), du guide d'onde (3) avec l'au moins un dispositif de couplage (4, 4a, 4b) et l'au moins un dispositif de découplage (5, 5a, 5b), du(des) détecteur(s) (12), et du(des) dispositif(s) d'exploitation (13, 13a, 13b), et **en ce que** les guides d'onde (3) des dispositifs individuels sont disposés, environ parallèlement l'un à l'autre, sur une pièce de support plane (15), de préférence sensiblement en forme de plaque.

9. Système de bus optique (1) selon l'une quelconque des revendications 1 à 8, **caractérisé en ce que** la pièce de support (15) se compose d'un matériau qui présente une densité optique plus faible que le matériau du guide d'onde (3), **en ce que** la pièce de support (15) présente des creux en forme de rainures ou de fosses dans au moins une de ses faces plates, et **en ce que** les guides d'onde (3) sont disposés dans les creux, de préférence sous la forme d'une matière polymère avec laquelle on remplit les rainures.

10. Système de bus optique (1) selon l'une quelconque des revendications 1 à 9, **caractérisé en ce que** l'au moins un guide d'onde (3) relie l'une à l'autre deux puces à semi-conducteur (6, 7), et **en ce que** l'au moins une source de rayonnement (8) et l'au moins un détecteur (12) sont intégrés sous forme d'éléments à semi-conducteur dans les puces à semi-conducteur (6, 7).

11. Système de bus optique (1) selon l'une quelconque des revendications 1 à 10, **caractérisé en ce qu'**il se trouve sur les puces à semi-conducteur (6, 7) des éléments de couplage enfichables (16) de préférence en forme de sabot, qui présentent chacun un logement (17) dans lequel une zone d'extrémité du guide d'onde (3) est chaque fois introduite de telle manière qu'au moins une source de rayonnement (8) intégrée dans une première puce à semi-conducteur (6, 7) soit tournée vers un dispositif de couplage (4, 4a, 4b) du guide d'onde et au moins un détecteur (12) intégré dans une deuxième puce à semi-conducteur (7, 6) soit tourné vers un dispositif de découplage (5, 5a, 5b) du guide d'onde (3).
